(19) **Europäisches Patentamt / European Patent Office / Office européen des brevets**

(11) **EP 4 306 941 B1**

(12) **EUROPEAN PATENT SPECIFICATION**

(45) Date of publication and mention
of the grant of the patent:
**22.04.2026 Bulletin 2026/17**

(21) Application number: **22184076.2**

(22) Date of filing: **11.07.2022**

(51) International Patent Classification (IPC):
**G01N 21/85** (2006.01)  **G01N 35/10** (2006.01)
**G01N 35/00** (2006.01)

(52) Cooperative Patent Classification (CPC):
**G01N 21/85**; G01N 2035/00534; G01N 2035/1018

(54) **APPARATUS AND METHOD FOR CHECKING STIRRING QUALITY OF A CHEMICAL ANALYZER**

VORRICHTUNG UND VERFAHREN ZUM ÜBERPRÜFEN DER RÜHRQUALITÄT EINES CHEMISCHEN ANALYSATORS

APPAREIL ET PROCÉDÉ DE VÉRIFICATION DE LA QUALITÉ D'AGITATION D'UN ANALYSEUR CHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.01.2024 Bulletin 2024/03**

(73) Proprietor: **FURUNO ELECTRIC CO., LTD.**
**Nishinomiya-City, Hyogo 662-8580 (JP)**

(72) Inventors:
• **KAMIMOTO, Yoshiki**
**Nishinomiya-City, 662-8580 (JP)**

• **YAMADA, Toshihisa**
**Nishinomiya-City, 662-8580 (JP)**

(74) Representative: **Müller Hoffmann & Partner Patentanwälte mbB**
**St.-Martin-Straße 58**
**81541 München (DE)**

(56) References cited:
**EP-A1- 0 810 030      EP-A1- 2 378 292**
**EP-A1- 3 216 518      EP-A2- 2 096 442**
**JP-A- 2015 078 963    US-A1- 2015 165 440**
**US-A1- 2021 041 472**

Description

## TECHNICAL FIELD

The present disclosure generally relates to analyzers used for analyzing test samples and, more particularly relates, to an apparatus and method for determining the stirring quality of an automatic chemical analyzer.

## BACKGROUND OF THE INVENTION

Automatic chemical analyzers are widely used for performing biochemical tests of multiple test samples in automatic or semi-automated manners. These analyzers are used for determining the percentage composition of substances (e.g., metabolites, electrolytes, markers, etc.) within test samples such as serum, plasma, chemical substance, etc. Stirring test samples, especially liquids, is an important aspect while performing an analysis using chemical analyzers. For instance, if stirring is insufficient or not properly done, the concentration of the substance to be measured will be inconsistent or uneven in the test sample. If the unevenness occurs, then the measurement results become inaccurate and can cause misdiagnosis or lead to faulty conclusions. Also, the stirring quality in chemical analyzers depends on multiple factors, among others, such as the material and configuration of a stirring element, shape of a container encompassing the test sample, stirring duration, and speed of stirring. Hence, it is important to evaluate the stirring performance and other functional aspects related to stirring in the chemical analyzers periodically. Hence, the chemical analyzers require frequent calibration based on the evaluation result to ensure precise and accurate test results.

One commonly used technique for measuring the stirring performance is based on photographing and analyzing the movement of tracer particles (*i.e.* an agitation evaluation method) or performing an analysis of the fluids based on the mixing ratio (*i.e.* stirring evaluation method) of the substances present in the analyte (*i.e.,* the test sample). However, such a technique delivers testing results for an analyte by performing the measurements in an agitation environment having a high agitation speed, and a small cross-sectional area of the test sample present in a container. Hence, in the agitation evaluation method, it is difficult to clearly grasp the agitation situation in 'the small area' where the agitation is performed at 'the high speed' in such an agitation environment. Further, in the stirring evaluation method, it is difficult to accurately measure the ratio in such a stirring environment because the amount of liquid is very small. Therefore, the results obtained from such traditional techniques may be inaccurate or not reliable for analytical purposes. Another technique to measure the stirring performance is disclosed in Japanese patent 6211382 titled "Automatic analyzer", which describes that the function of an analytical device is to evaluate the stirring capacity using an imaging device such as for example a high-precision camera. In this disclosed technique, measurement data can only be obtained from a fixed photometric area that provides the measurement results in only a limited portion of the container encompassing the test sample. Additionally, other factors such as stirring, quantification of dispensing, dilution, photometric noise, etc., affect the final results of the analysis process.

EP 2 378 292 A1 describes an automatic analyzer that is capable of obtaining analysis results using reaction liquids with absorbance appropriate for analysis processing.

EP 2 096 442 A1 describes an automatic analyzer that is capable of monitoring the reactions of an analyzer for clinical examination.

US 2021/041 472 A1 describes an automatic analyzer and method for carrying out chemical, biochemical, and/or immunochemical analyses.

EP 3 216 518 A1 describes a sample processing method for processing a target component in a sample by use of a sample processing chip having a storage portion and a droplet forming flow path.

EP 0 810 030 A1 describes apparatus and containers for performing polymerase chain reaction.

US 2015/165 440 A1 describes an apparatus for DNA amplification with quantitative measurements.

Therefore, there is a need for techniques for evaluating the stirring performance of chemical analyzers without employing high-precision cameras, external equipment to control the movement of the cameras, unreliable photometric processes, etc. Further, such techniques should be capable of evaluating not only the photometric area but also the entirety of the test samples placed in a container, in addition to providing other technical benefits.

## SUMMARY OF THE INVENTION

In order to solve the foregoing problem and to provide other advantages, one aspect of the present disclosure, as defined in claim 1, is to provide an apparatus for checking the stirring quality of a chemical analyzer, where the chemical analyzer includes a reaction container holding a first cuvette. The apparatus includes a stirrer configured to generate agitation of a test liquid contained in the first cuvette. The apparatus includes a convection generator configured to generate thermal convection of the test liquid in the first cuvette. The thermal convection is generated due to temperature difference caused at least by providing different temperature to the first cuvette. Further, the apparatus includes a photometric device configured, at least in part, to radiate light through the test liquid contained in the first cuvette during the thermal convection of the test liquid and then, continuously generate an output signal in response to receipt of the radiated light through the test liquid. Furthermore, the apparatus includes a determination module configured, at least in part, to determine photometric data associated with absorbance values of the test liquid, where the absorbance values are calculated based at least on the output signal. Then, the determination module determines at least one metric representing the stirring quality of the test liquid based at least on the photometric data.

An advantage of various embodiments is to determine the overall stirring quality of a test liquid by generating the thermal convection in the test liquid. The determination module can determine the photometric data of the complete test liquid present in the first cuvette (or the stirring region) due to the thermal convection of the test liquid. As a result, the determination module ensures the test liquid is sufficiently stirred based on determining the status of the stirring quality of the complete test liquid (or the stirring region). Further, ensuring the test liquid is sufficiently stirred enables a precise analysis of the test liquid in the chemical analyzer.

In an aspect, the at least one metric determined by the determination module includes a status of a stirring function. The status includes one of a success state, a failure state, and a percentage or a score indicating the success of stirring.

In an aspect, the determination module is further configured, at least in part, to calculate the absorption values based on the output signal, and to obtain the photometric data comprising one or more parameters associated with the absorption values. The one or more parameters are at least one of an absorbance range, at least one inclination of absorbance on a time scale, a convergence time of the absorbance values, and a metric of dispersion associated with the absorbance values. An advantage of various embodiments is to extract various parameters relating to the stirring quality from the photometric data and perform quantitative analysis of the parameters determined for a predetermined time to accurately determine the status of the stirring quality of the chemical analyzer.

In an aspect, the determination module is further configured, at least in part, to determine an optimum stirring rate based at least on the result of the stirring quality determined by the determination module, and transmit a control signal to operate the stirrer for agitating the test liquid based at least on the optimum stirring rate. An advantage of various embodiments is to operate the stirrer at an optimum stirring rate for sufficiently stirring the test liquid and preventing any disruption in the composition of the test liquid while performing the analysis.

In an aspect, the photometric device includes a light source configured to radiate the light onto at least a lower portion of the first cuvette and a photodetector configured to generate the output signal based at least on the electromagnetic spectrum associated with the radiated light.

In an aspect, the stirrer includes one or more of a mechanically driven stirring rod, a magnetic stirrer, an ultrasonic stirrer, an electromagnetic wave-based stirrer, and an electrolytic stirrer.

In an aspect, the reaction container holds at least one second cuvette positioned adjacent to the first cuvette. Further, the second cuvette is configured to hold liquid of a different temperature, thereby resulting in the temperature difference around the first cuvette.

In an aspect, the reaction container holds at least one second cuvette positioned on two opposite adjacent sides of the first cuvette. The second cuvettes arranged on two opposite adjacent sides of the first cuvette are configured to hold liquids of different temperatures, thereby resulting in the temperature difference around the first cuvette.

In an aspect, the convection generator is configured to generate the temperature difference of the liquid contained in the at least one second cuvette for causing thermal convection of the test liquid in the first cuvette. The convection generator is configured to adjust the temperature of a liquid in one second cuvette of the two adjacent second cuvette more than a first temperature threshold and adjust the temperature of a liquid in another second cuvette of the two adjacent second cuvette less than a second temperature threshold.

In an aspect, the test liquid includes a combination of a specimen and a reagent or a combination of water and dye.

In an aspect, the determination module is further configured, at least in part, to determine the photometric data associated with absorbance values calculated at a plurality of time instances in a predetermined time period.

In an aspect, the predetermined time period includes a time period of stirring of the test liquid, a time period of convection of the test liquid, a time period of rotation of the reaction container, a threshold time after the reaction container stops rotating, or any combination thereof.

In an aspect, the radiated light includes at least one of a light transmitted through the first cuvette and scattered light through the first cuvette.

Another aspect of the present disclosure, as defined in claim 14, s to provide a method for checking the stirring quality of a chemical analyzer, where the chemical analyzer includes a reaction container holding a first cuvette. The method includes operating a stirrer to agitate a test liquid contained in the first cuvette, and the method includes generating thermal convection of the test liquid in the first cuvette. The thermal convection is generated due to temperature difference caused at least by providing different temperature to the first cuvette. Further, the method includes radiating light through the test liquid contained in the first cuvette during the thermal convection of the test liquid and continuously generating an output signal in response to receipt of the radiated light through the test liquid. The method further includes determining photometric data associated with absorbance values of the test liquid. The absorbance values are calculated based at least on the output signal. Furthermore, the method includes determining at least one metric representing the stirring quality of the test liquid based at least on the photometric data. The at least one metric includes a status of a stirring function. The status includes one of a success state, a failure state, and a percentage or a score indicating the success of stirring.

In an aspect, the method further includes calculating the absorption values based on the output signal and obtaining the photometric data comprising one or more parameters associated with the absorption values. The one or more parameters are at least one of an absorbance range, at least one inclination of absorbance on a time scale, a convergence time of the absorbance values, and a metric of dispersion of the electromagnetic spectrum associated with the absorbance values.

In an aspect, the method further includes determining the photometric data associated with absorbance values based on the calculation of the absorbance values at a plurality of time instances in a predetermined time period. The predetermined time period includes a time period of stirring of the test liquid, a time period of convection of the test liquid, a time period of rotation of the reaction container, a threshold time after the reaction container stops rotating, or any combination thereof.

The foregoing summary is illustrative only and is not intended to be in any way limiting. In addition to the illustrative aspects, embodiments, and features described above, further aspects, embodiments, and features will become apparent by reference to the drawings and the following detailed description.

## EFFECT(S) OF THE INVENTION

The present disclosure provides an apparatus and method for checking the stirring quality of a chemical analyzer. Specifically, the apparatus determines photometric data of complete test liquid present in a reaction container of the chemical analyzer by generating thermal convection of the test liquid. The apparatus determines the stirring quality of the complete test liquid based on the photometric data.

## BRIEF DESCRIPTION OF THE DRAWINGS

The following detailed description of illustrative embodiments is better understood when read in conjunction with the appended drawings. For the purpose of illustrating the present disclosure, exemplary constructions of the disclosure are shown in the drawings. However, the present disclosure is not limited to a specific device, or a tool and instrumentalities disclosed herein. Moreover, those skilled in the art will understand that the drawings are not to scale.

FIG. 1 illustrates a schematic representation of a chemical analyzer, where at least some embodiments of the present disclosure may be implemented;

FIG. 2A illustrates a schematic representation of a portion of the chemical analyzer, depicting a first cuvette and an apparatus for checking the stirring quality of a test liquid, in accordance with an embodiment of the present disclosure;

FIGS. 2B and 2C represent example scenarios for generating the thermal convection of the test liquid in the first cuvette, in accordance with some embodiments of the present disclosure;

FIG. 3 illustrates an example scenario depicting the working of a photometric device associated with the apparatus of FIG. 2A, in accordance with an embodiment of the present disclosure;

FIG. 4 represents a graph depicting a variation of absorbance values associated with radiated light through the test liquid computed at a plurality of time instances within a predetermined time, in accordance with an embodiment of the present disclosure;

FIG. 5 illustrates a flow diagram of a method for checking the stirring quality of the test liquid in the chemical analyzer, in accordance with an embodiment of the present disclosure;

FIG. 6 illustrates a flow diagram of a method for checking the stirring quality of the test liquid in the chemical analyzer, in accordance with another embodiment of the present disclosure; and

FIG. 7 illustrates a flow diagram of a method for checking the stirring quality of the test liquid in the chemical analyzer, in accordance with another embodiment of the present disclosure.

The drawings referred to in this description are not to be understood as being drawn to scale except if specifically noted, and such drawings are only exemplary in nature.

## DETAILED DESCRIPTION OF THE INVENTION

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments described herein. The examples used herein are intended merely to facilitate an understanding of ways in which the embodiments described herein may be practiced and to further enable those of skill in the art to practice the embodiments described herein. Accordingly, the examples should not be construed as limiting the scope of the embodiments described herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specific details for the purposes of illustration, anyone skilled in the art will appreciate that many variations and/or alterations to said details are within the scope of the present disclosure. Similarly, although many of the features of the present disclosure are described in terms of each other, or conjunction with each other, one skilled in the art will appreciate that many of these features can be provided independently of other features. Accordingly, this description of the present disclosure is set forth without any loss of generality, and without imposing limitations upon, the present disclosure.

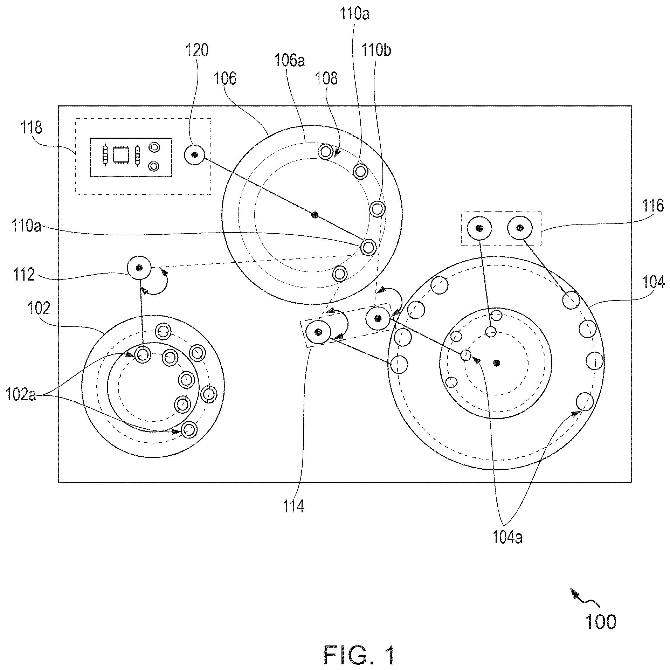

Various embodiments of the present disclosure provide an apparatus for checking the stirring quality of a chemical analyzer. Without loss of generality, one example of a chemical analyzer is explained with reference to FIG. 1. Further, various example embodiments of apparatus for checking the stirring quality of the chemical analyzer and methods thereof are described hereinafter with reference to FIG. 1 to FIG. 7.

Referring now to FIG. 1, a schematic representation of a chemical analyzer 100 is illustrated, where at least some embodiments of the present disclosure can be implemented. It should be understood that the present disclosure can also be applied in other variations of the chemical analyzer, and the chemical analyzer 100 represents merely one form of the chemical analyzer in which the teachings of the present disclosure can be implemented. In some examples, the present disclosure may also be implemented as a stand-alone unit that may be coupled with a chemical analyzer to enhance its operation. In normal working scenarios, the chemical analyzer 100 includes one or more components that are capable of performing an analysis of an analyte, *i.e.,* a test sample. In an embodiment, the chemical analyzer 100 analyzes and/or performs an examination of the test sample which will be explained further in detail later in the present disclosure.

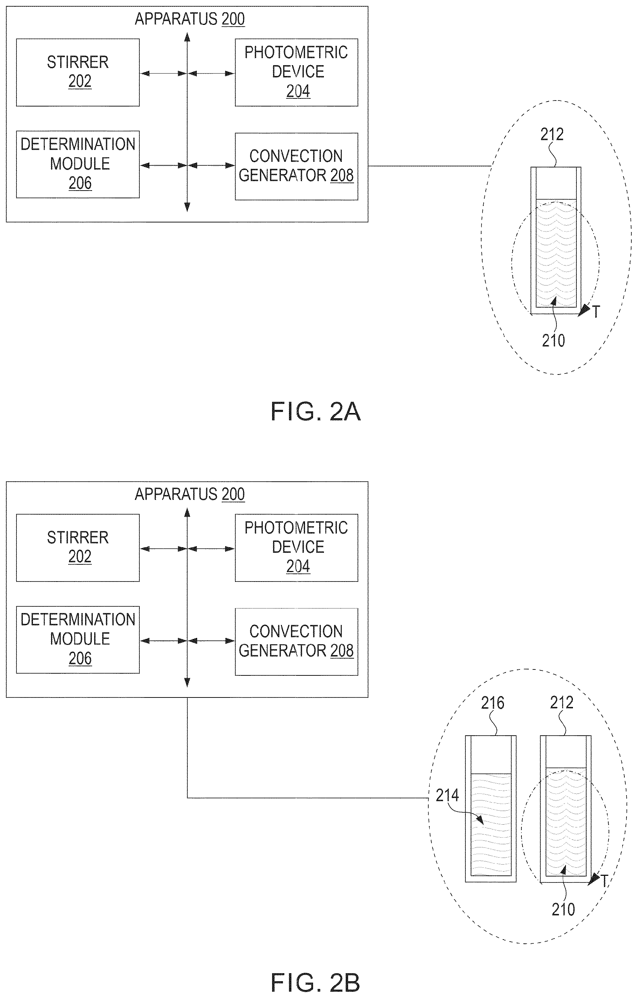

The chemical analyzer 100 includes a first container 102 and a second container 104. The first container 102 is configured with a plurality of first receptacles 102a. As shown, the first container 102 is configured with a substantially-circular structure. In an embodiment, the first receptacles 102a may be arranged in a circumferential manner in the first container 102. For checking the stirring quality of the chemical analyzer 100, each of the first receptacles 102a is configured to receive a test liquid (*see,* 210 in FIG. 2A) therein, thus enabling the chemical analyzer 100 to test multiple samples (*i.e.,* the test liquid 210 contained in each of the first cuvette 110a) in a short time. In one example, the test liquid 210 may include water and dye (pigment). In another example, the test liquid 210 may include a sample such as, but not limited to, blood, urine, serum, and the like. Thus, the test liquid 210 to be tested and/or analyzed is contained in each of the first receptacles 102a.

Further, the second container 104 is configured with a plurality of second receptacles 104a. Similar to the first container 102, the second container 104 is configured with a substantially-circular structure (as shown in FIG. 1). In an embodiment, the second receptacles 104a may be arranged in a circumferential manner within the second container 104.

In an embodiment, the first and second containers 102 and 104 may include a drive mechanism (not shown in figures) for allowing the first and second containers 102 and 104 to attain a rotary motion during the examination process. In another embodiment, the first and second containers 102 and 104 may include support structures (not shown in figures). The support structures may be configured to detachably support the first receptacles 102a and the second receptacles 104a. In this scenario, the drive mechanism may be configured to rotate the support structure containing the first receptacles 102a in the first container 102 and support the second container 104 containing the second receptacles 104a in the second container 104 during the analysis process.

The chemical analyzer 100 further includes a reaction container 106. The reaction container 106 includes a supporting member 106a rotatably secured within the reaction container 106. The supporting member 106a is configured to detachably secure a plurality of cuvettes 108. More specifically, the supporting member 106a may be configured with an engagement means for allowing each of the cuvettes 108 to be detachably secured to the supporting member 106a. The engagement means may include, but are not limited to, snap-fit arrangement, latching member, or any other suitable engagement means. Further, the reaction container 106 may include a drive mechanism (not shown in figures) that is operatively coupled to the supporting member 106a. As such, the drive mechanism is operatively coupled to the supporting member 106a and may be configured to rotate the supporting member 106a containing the cuvettes 108 during the examination process. As may be understood, the rotary motion of the supporting member 106a allows dispensing of the test liquid 210 and the liquid in the cuvettes 108 and facilitates the chemical analyzer 100 to perform an analysis of the test liquid 210 contained in the cuvettes 108.

In the illustrated configuration, the plurality of cuvettes 108 includes a plurality of first cuvettes 110a and a plurality of second cuvettes 110b. The first cuvettes 110a and the second cuvettes 110b are arranged in an alternate arrangement on the supporting member 106a and positioned in the reaction container 106. In one case, the first cuvettes 110a may receive the test liquid 210 therein. The second cuvettes 110b are arranged adjacent to the first cuvettes 110a. The chemical analyzer 100 includes a first dispenser 112 and at least one second dispenser 114. The first dispenser 112 is configured to dispense the test liquid 210 contained in one of the first receptacles 102a to the first cuvette 110a. In particular, the first dispenser 112 may include a pipette and a drive mechanism (not shown in figures). The pipette facilitates siphoning or sucking of the test liquid 210 contained in the first receptacle 102a and the drive mechanism is operated to drive the first dispenser 112 towards the reaction container 106 such that the first cuvettes 110a is juxtaposed below the first dispenser 112. Thereafter, the first dispenser 112 dispenses the test liquid 210 into the first cuvettes 110a via the pipette. Similarly, at least one second dispenser 114 is configured to dispense liquid contained in the second receptacles 104a into the second cuvette 110b.

In one scenario, the test liquid 210 may include a combination of a specimen and a reagent. In this scenario, the specimen and reagent may be contained in the first receptacles 102a and second receptacles 104a, respectively. The specimen may be dispensed from the first receptacles 102a into the first cuvettes 110a via the first dispenser 112. Further, the chemical analyzer 100 may include at least one third dispenser 116 for dispensing the reagent from the second receptacles 104a into the first cuvettes 110a. In this scenario, the reaction container 106 may be adapted to a suitable temperature for simulating the reaction between the specimen and the reagent.

It is to be noted that the present disclosure is explained with reference to performing an analysis of test liquids (such as the test liquid 210) in the chemical analyzer 100 for the purposes of checking the stirring quality of the chemical analyzer 100. Specifically, the results of the analysis depend primarily on the composition of the test liquid 210. Prior to initializing the analysis, the test liquid 210 under test may be subjected to one or more pre-processing techniques for obtaining accurate results. One such pre-processing technique is generating agitation (or stirring) of the test liquid 210 under test. In general, stirring facilitates speeding up the reactions or maintaining a homogeneous mixture. As it is known that improper agitation leads to inaccurate results. To that effect, the chemical analyzer 100 includes an apparatus 118 for performing one or more operations for checking the stirring quality of chemical analyzer 100 to obtain accurate results. Without loss of generality, the test liquid (see, 210 of FIGS. 2A-2C) is utilized for checking the stirring quality of the chemical analyzer 100 which will be further explained in detail.

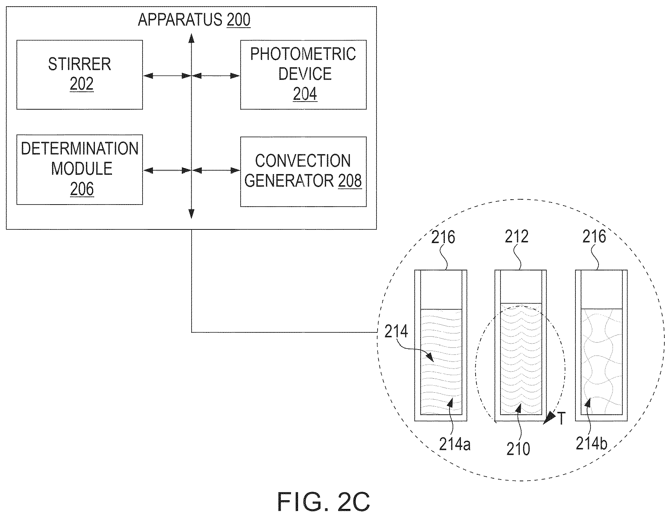

The apparatus 118 includes a stirrer 120. The stirrer 120 is configured to generate agitation of the test liquid 210 contained in the first cuvettes 110a, upon dispensing the test liquid 210 in the first cuvettes 110a. Some non-limiting examples of the stirrer 120 include a mechanically driven stirring rod, an ultrasonic stirrer, an electromagnetic wave-based stirrer, and an electrolytic stirrer. Thereafter, the test liquid 210 upon agitation is subjected to thermal convection (represented as a zone 'T' bounded by dashed lines in FIGS. 2A-2C). The thermal convection is caused due to a temperature difference caused at least by providing different temperatures to the first cuvettes 110a. In one example scenario, the apparatus 118 may include a convection generator for providing different temperatures to the first cuvettes 110a which is explained with reference to FIG. 2A. In another example scenario, the temperature difference may be caused by liquid of different temperatures in the second cuvettes 110b arranged adjacent to the first cuvettes 110a which is explained with reference to FIGS. 2B and 2C. The thermal convection allows the test liquid 210 to attain a degree of randomness (i.e., facilitating the movement of the test liquid 210 throughout a length of the first cuvettes 110a). In other words, the thermal convection may increase the rate of stirring of the test liquid 210 for obtaining a homogenous mixture of the test liquid 210.

Thereafter, the apparatus 118 is configured to determine photometric data associated with the test liquid 210 for determining the stirring quality of the test liquid 210. Specifically, the apparatus 118 is configured to emit and/or radiate light through the test liquid 210 contained in the first cuvettes 110a during the thermal convection. It is to be noted that the first cuvettes 110a may be made of transparent materials for allowing the transmission of the radiated light therethrough. The apparatus 118 is configured to continuously generate an output signal in response to the radiated light through the first cuvettes 110a containing the test liquid 210. Thereafter, the apparatus 118 is configured to calculate the absorption values associated with the test liquid 210 based on the output signal. The apparatus 118 determines the photometric data associated with the absorbance values of the test liquid 210. The apparatus 118 further determines at least one metric representing the stirring quality of the test liquid 210 based at least on the photometric data. At least one metric includes a status (*i.e.,* a success state, a failure state, and a percentage or a score indicating the success of stirring) of the stirring quality. In other words, the test liquid 210 agitated in the first cuvettes 110a (due to thermal convection) is continuously measured by the light being transmitted through the first cuvettes 110a, and the degree of the agitation (or the stirring quality) is determined based on the temporal change of the measured data. Thus, it is understood that, by generating a gentle thermal convection current in the test liquid 210 and continuously measuring the light, the stirring quality of the whole stirring region in the test liquid 210 is computed. Some examples of determining the stirring quality are explained with reference to FIGS. 2A-2C.

FIG. 2A illustrates a schematic representation of a portion of the chemical analyzer 100, depicting a first cuvette and an apparatus 200 for checking the stirring quality of a chemical analyzer, in accordance with an embodiment of the present disclosure. The apparatus 200 is an example of the apparatus 118 of FIG. 1. For description purposes, one first cuvette 212 is taken as an example from the plurality of first cuvettes 110a (as shown in FIG. 2A) for explaining the process involved in checking the stirring quality of the chemical analyzer 100. As shown, the first cuvette 212 of the plurality of first cuvettes 110a contains the test liquid 210 under test. The apparatus 200 checks the stirring quality of the test liquid 210 in the first cuvette 212 to obtain accurate results. It will be apparent to a person skilled in the art that similar operations may be performed for determining the stirring quality of the test liquid 210 contained in each of the plurality of first cuvettes 110a.

The apparatus 200 includes a stirrer 202, a photometric device 204, a determination module 206, and a convection generator 208. The stirrer 202 is an example of the stirrer 120 of FIG. 1. The stirrer 202 is configured to perform agitation of the test liquid 210 contained in the first cuvette 212. The test liquid 210 contained in the first cuvette 110a is agitated by the stirrer 202 and is then subjected to thermal convection upon agitation. As explained above, the thermal convection of the test liquid 210 is caused by providing different temperatures to the first cuvette 212, *i.e.,* the thermal convection within the test liquid 210 of the first cuvette 212 is produced by introducing a temperature difference within different portions of the first cuvette 212.

Specifically, the convection generator 208 is configured to cause the temperature difference to the first cuvette 212, thus resulting in the thermal convection of the test liquid 210 contained in the first cuvette 212. In an example, the convection generator 208 is configured to cause the temperature difference in the first cuvette 212 containing the test liquid 210 based at least on a first threshold temperature and a second threshold temperature. For example, the first threshold temperature may correspond to a temperature higher than 37 degrees Celsius and the second threshold temperature may correspond to a temperature lower than 10 degrees Celsius. In another example, other possible temperature ranges may also be used to define the respective threshold temperatures.

In an embodiment, the convection generator 208 may include a heating device and/or a cooling device. Further, either the heating device or the cooling device, or the combination thereof may be configured to cause the temperature difference in the first cuvette 212. In another embodiment, the convection generator 208 may include a heating sheet and a cooling sheet. In this scenario, the heating sheet or the cooling sheet or the combination thereof may be attached to the side surfaces and bottom surfaces of the first cuvette 212. The heating and cooling sheets are configured to generate the thermal convection of the test liquid 210 by causing the temperature difference in the first cuvette 212.

Referring to FIG. 2B, an example scenario for generating the thermal convection of the test liquid 210 in the first cuvette 212 is shown, in accordance with another embodiment of the present disclosure. In this scenario, the thermal convection of the test liquid 210 is generated by liquid (*see,* 214 of FIG. 2B) of different temperature contained in a second cuvette 216. For example, the second cuvette 216 may be one cuvette among the plurality of second cuvettes 110b. Further, the second cuvette 216 is positioned and/or arranged adjacent to the first cuvette 212. As explained above, the second receptacles 104a are configured to hold the liquid (such as the liquid 214). The liquid 214 may be maintained at nominal temperature (or ambient temperature) in the second container 104. Further, the liquid 214 is maintained at the nominal temperature and is dispensed in the second cuvette 216 positioned adjacent to the first cuvette 212 containing the test liquid 210 (as shown in FIG. 2B). In other words, the reaction container 106 holds at least one second cuvette (*e.g.,* the second cuvette 216) positioned adjacent to the first cuvette 212. In this scenario, the convection generator 208 may be operated upon agitating the test liquid 210 to cause the thermal convection of the test liquid 210 in the first cuvette 212. Specifically, the convection generator 208 is configured to maintain and/or adjust the temperature of the liquid 214 contained in the second cuvette 216 based on either the first threshold temperature or the second threshold temperature. For example, the convection generator 208 may heat or cool the liquid 214 contained in the second cuvette 216 based on the first threshold temperature or the second threshold temperature, respectively. The liquid 214 (*i.e.,* hot liquid or cold liquid) contained in the second cuvette 216 causes the temperature difference around the first cuvette 212, thereby causing the thermal convection to occur in the test liquid 210 contained in the first cuvette 212. In other words, the second cuvette 216 is configured to hold the liquid 214 of a different temperature for inducing thermal convection to the test liquid 210 contained in the first cuvette 212.

In an embodiment, the convection generator 208 may be operated to alter the temperature of the liquid 214 resulting in the thermal convection, when the liquid 214 is contained in the second receptacles 104a of the second container 104. As explained above, the convection generator 208 may adjust the temperature of the liquid 214 contained in the second receptacles 104a based on the first threshold temperature or the second threshold temperature. Thereafter, the second dispenser 114 may dispense the liquid 214 from the second receptacles 104a to the second cuvette 216 arranged adjacent to the first cuvette 212, thereby causing the temperature difference around the first cuvette 212.

Referring to FIG. 2C, an example scenario for generating the thermal convection of the test liquid 210 in the first cuvette 212 is shown, in accordance with another embodiment of the present disclosure. In this scenario, the thermal convection of the test liquid 210 is generated by the liquid 214 of different temperatures contained in two second cuvettes (*see,* the second cuvette 216) arranged on two opposite adjacent sides to the first cuvette 212 as shown in FIG. 2C. In other words, the reaction container 106 holds at least one second cuvette (*e.g.,* two second cuvettes 216) positioned on the two opposite adjacent sides of the first cuvette 212. The second cuvettes 216 arranged on the two opposite adjacent sides of the first cuvette 212 are configured to hold liquids 214 of different temperatures, thereby resulting in the temperature difference around the first cuvette 212.

As explained above, the liquid 214 maintained at nominal or ambient temperature is contained in the second receptacles 104a. Further, the at least one second dispenser 114 dispenses the liquid 214 maintained at the nominal temperature to the second cuvette 216 ('two second cuvettes') positioned adjacent to the first cuvette 212 containing the test liquid 210 (as shown in FIG. 2C). Thereafter, the convection generator 208 is configured to cause the temperature difference of the liquid 214 in the two adjacent second cuvettes 216 for causing thermal convection of the test liquid 210 in the first cuvette 212. Specifically, the convection generator 208 is configured to adjust the temperature of the liquid 214 in one second cuvette (towards the left of the first cuvette 212) of the two adjacent second cuvette 216 more than the first threshold temperature. Further, the convection generator 208 adjusts the temperature of the liquid in another second cuvette (towards the right of the first cuvette 212) of the two adjacent second cuvette 216 less than the second threshold temperature. In the illustrated representation of FIG. 2C, the liquid of high temperature in one second cuvette of the two adjacent second cuvette 216 is represented by 214a and the liquid of low temperature in another second cuvette is represented by 214b. Further, the liquid of high-temperature 214a and the liquid of low-temperature 214b are collectively referred to as the liquid 214. Temperature difference of the liquid 214 in the two adjacent second cuvette 216 causes the thermal convection of the test liquid 210 contained in the first cuvette 212. In other words, a hot water cuvette and a cold water cuvette arranged on the right and left sides or vice versa (*i.e.,* two adjacent sides of the first cuvette 212) of the first cuvette 212 cause the temperature difference around the first cuvette 212, thereby resulting in the thermal convection of the test liquid 210.

In an embodiment, the convection generator 208 may be operated to alter the temperature of the liquid 214 such that it results in the generation of thermal convection when the liquid 214 is contained in the second receptacles 104a of the second container 104. In this scenario, the second container 104 may include separate compartments (not shown in figures) to contain the liquid 214 of different temperatures (*e.g.,* hot and cold water). Further, the at least one second dispenser 114 may be operated for dispensing the liquid 214 of different temperatures in the corresponding second cuvette 216 positioned adjacent to the first cuvette 212. As a result, the temperature difference caused by the liquid 214 of different temperatures in the second cuvettes 216 facilitates the thermal convection of the test liquid 210 present in the first cuvette 212. In an example, this thermal convection within the test liquid 210 may last as long as the temperature difference is maintained. When the temperature difference no longer exists, the thermal convection may be stopped.

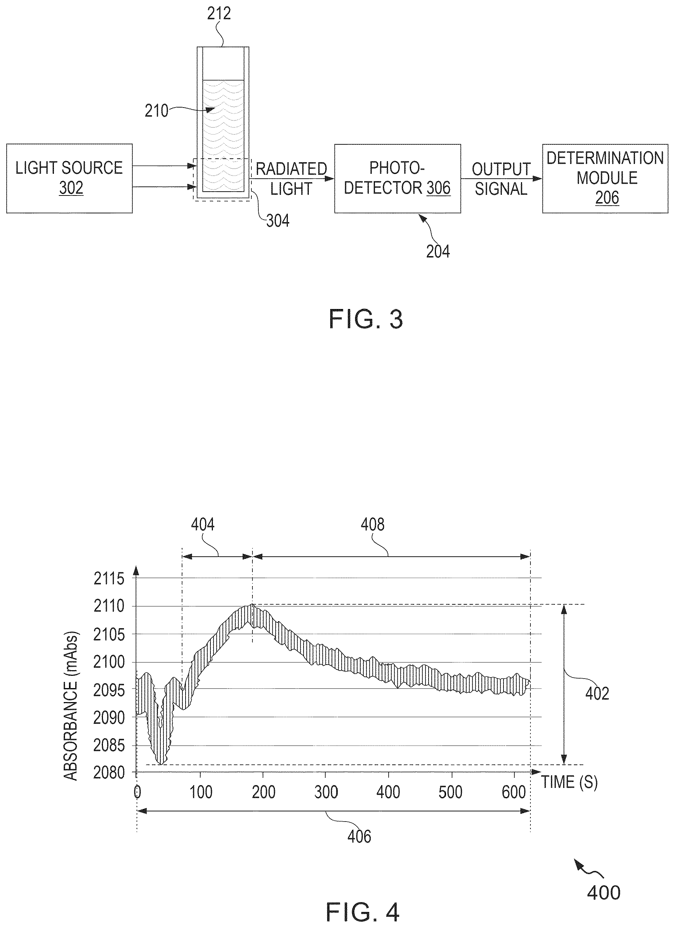

Further, the apparatus 200 is configured to determine the photometric data of the test liquid 210, upon generating the thermal convection of the test liquid 210. Specifically, the photometric device 204 is configured to radiate light through the test liquid 210 contained in the first cuvette 212 until the thermal convection is stopped or eliminated. In an embodiment, the photometric device 204 is configured to continuously generate the output signal in response to receipt of the radiated light being transmitted through the first cuvette 212 which will be explained with reference to FIG. 3.

Referring to FIG. 3, an example scenario depicting the working of the photometric device 204 is shown, in accordance with an embodiment of the present disclosure. The photometric device 204 includes a light source 302 configured to radiate the light onto at least a lower portion 304 of the first cuvette 212. The lower portion 304 of the first cuvette 212 corresponds to a photometric region, *i.e.,* a fixed area of the first cuvette 212 through which the light is being transmitted. The light source 302 can take examples of a halogen lamp, light-emitting diodes (LEDs), lasers, and the like. In an embodiment, the light source 302 is capable of switching a wavelength of the light emitted onto the lower portion 304 of the first cuvette 212. The light incident onto the lower portion 304 of the first cuvette 212 is transmitted through the test liquid 210 contained in the first cuvette 212. In an embodiment, the light emitted by the light source 302 onto the first cuvette 212 may be scattered due to the test liquid 210. In other words, the radiated light may be the scattered light through the first cuvette 212.

The photometric device 204 further includes a photodetector 306 configured to receive the radiated light and measure the intensity of the radiated light. Specifically, the photodetector 306 is configured to continuously generate the output signal based at least on the electromagnetic spectrum associated with the radiated light. The photodetector 306 is configured to detect radiated light emanating at any angle from the first cuvette 212, for example, the light transmitted without being scattered through the first cuvette 212 as well as the light scattered from the first cuvette 212. In other words, the photodetector 306 is configured to convert the light photons or light energy into an electrical signal (*i.e.,* the output signal). For example, the photodetector 306 may include a 1 D-array of photodetectors. The photodetector 306 may employ spectroscopy to determine the electromagnetic spectrum of the radiated light and generate the output signal. In addition, the photodetector 306 is adapted to generate the output signal including the electromagnetic spectrum of the radiated light when the light source 302 is radiating the light of different wavelengths. In an embodiment, the photodetector 306 may employ a colorimetric method or any other techniques for generating the output signal including the electromagnetic spectrum of the radiated light being transmitted through the test liquid 210.

It is to be noted that the light source 302 radiates the light onto the lower portion 304 and the output signal is generated for the portion of the test liquid 210 present in a fixed area of the first cuvette 212 through which the light is being transmitted. The fixed area corresponds to a photometric region of the photometric device 204. However, it should be appreciated by those skilled in the art that the thermal convection allows the test liquid 210 to attain a degree of randomness (*i.e.*, movement of the molecules of the test liquid 210 throughout the length of the first cuvette 212 based on its density). The photometric device 204 is continuously operated until the thermal convection is eliminated to determine the parameters associated with the stirring quality of the test liquid 210 which is explained further in detail.

Referring again to FIG. 2A-2C, the determination module 206 includes suitable logic and/or circuitry for determining the photometric data based at least on receipt of the output signal from the photometric device 204. In an embodiment, the determination module 206 may include at least one processor and memory (not shown for the sake of brevity). The memory may be capable of storing executable instructions, whereas the processor may be capable of executing instructions to perform the operations described herein. The memory may include suitable logic, circuitry, and/or interfaces to store a set of computer-readable instructions for performing operations described herein. In an embodiment, the memory may be embodied as one or more volatile memory devices, one or more non-volatile memory devices, and/or a combination of one or more volatile memory devices and non-volatile memory devices. Examples of the memory include random-access memory (RAM), a read-only memory (ROM), a removable storage drive, and the like. The processor may be embodied in a number of different ways. The processor may be embodied as a multi-core processor, a single-core processor; or a combination of multi-core processors and single-core processors. For example, the processor may be embodied as one or more of various processing means such as a coprocessor, a microprocessor, a controller, a digital signal processor (DSP), processing circuitry with or without an accompanying DSP, or various other processing devices including integrated circuits such as, for example, an application-specific integrated circuit (ASIC), a field-programmable gate array (FPGA), a microcontroller unit (MCU), a hardware accelerator, a special-purpose computer chip, or the like. In an example embodiment, the multi-core processor may be configured to execute instructions that can be accessible to the processor. Alternatively or additionally, the processor may be configured to execute hard-coded functionality.

In an embodiment, the determination module 206 is configured to calculate absorbance values based at least on the output signal. The absorbance values correspond to the ratio of the intensity of radiated light transmitted through the test liquid 210 to the intensity of light emitted from the light source 302, prior to being transmitted through the test liquid 210. For example, the absorbance values may be computed by using the following equation Eq. 1:

$$\text{Absorbance} = \log (I_1/I_2)\ldots\ldots\ldots (\text{Eq. 1})$$

wherein $I_1$ and $I_2$ are initial and final intensities associated with the light emitted from the light source 302 and the radiated light through the test liquid 210, respectively.

Thereafter, the determination module 206 is configured to determine photometric data associated with the absorbance values of the test liquid 210. In a non-limiting example, the determination module 206 calculates the absorbance values of the test liquid 210 when the first cuvette 212 is circulating on the supporting member 106a within the reaction container 106 and until the thermal convection of the test liquid 210 persists. The photometric data may provide information related to the variation of absorbance values within the predetermined time. Additionally, the determination module 206 is configured to determine the photometric data associated with the absorbance values calculated at a plurality of time instances in a predetermined time period. The predetermined time period may be any of: a time period of stirring of the test liquid 210, a time period of thermal convection of the test liquid 210, a time period of rotation of the reaction container 106, a threshold time after the reaction container 106 stops rotating, or any combination thereof.

Further, the determination module 206 is configured to determine at least one metric representing the stirring quality of the test liquid 210 based at least on the photometric data. In particular, the determination module 206 extracts one or more parameters from the photometric data associated with the absorbance values. The determination module 206 is configured to perform a quantitative analysis of each of the one or more parameters to determine the stirring quality of the test liquid 210. In other words, the determination module 206 is configured to analyze the variation of each of the one or more parameters (as shown in FIG. 4) to determine at least one metric related to the stirring quality of the test liquid 210. At least one metric represents the status of the stirring quality. The status of the stirring quality may be a success state, a failure state, and a percentage or a score indicating the success of stirring. In an embodiment, the determination module 206 may include pre-stored data related to standard absorbance values. To that effect, the determination module 206 performs the quantitative analysis of the photometric data based at least on the standard absorbance values to determine the stirring quality of the test liquid 210 which is explained with reference to FIG. 4.

Referring to FIG. 4, a graph 400 depicts a variation of the absorbance values computed at the plurality of time instances within the predetermined time. In other words, the graph 400 provides data related to photometric data associated with the absorbance values. The determination module 206 obtains the one or more parameters from the photometric data associated with the absorbance values. The one or more parameters may include, but are not limited to, an absorbance range (see, 402), at least one inclination (see, 404) of absorbance on a time scale, a convergence time (see, 406) of the absorbance values, and a metric of dispersion (see, 408) associated with the absorbance values. The absorbance range 402 is a difference between a maximum absorbance (lower concentration) and minimum absorbance (high concentration) of the test liquid 210. In an example, the inclination 404 corresponds to the convection velocity. The convergence time 406 is the time until the thermal convection is eliminated or the test liquid 210 is fully agitated. Further, the metric of dispersion 408 is the sum of squared differences from the absorbance at convergence. The determination module 206 determines the stirring quality based at least on the parameters 402, 404, 406, and 408. For example, the parameters 402-408 for determining the stirring quality of the test liquid 210 are shown below in Table 1.

Table 1

| SL. No. | PARAMETERS | STIRRING QUALITY | |
| --- | --- | --- | --- |
| | | SUCCESS STATE | FAILURE STATE |
| 1. | ABSORBANCE RANGE | Small | Large |
| 2. | INCLINATION | Large | Small |
| 3. | CONVERGENCE TIME | Short | Long |
| 4. | DISPERSION METRIC | Small | Large |

In one scenario, the determination module 206 may stop the stirring of the test liquid 210, if the status is determined to be the success state and may reinitiate the process if the status is determined to be the failure state. In another scenario, the determination module 206 may compute the percentage or the score indicating the success of the stirring. In this scenario, the determination module 206 may compare the percentage or the score with a threshold value for determining the success of the stirring. For example, if the percentage or the score exceeds the threshold value, the stirring quality is determined to be sufficient, and if the percentage or the score is less than the threshold value, the stirring quality is determined to be insufficient.

It is to be noted that the absorbance values of the test liquid 210 determined in the fixed area (i.e., the lower portion 304 of the first cuvette 212) during the thermal convection facilitates the determination of the stirring quality of the test liquid 210 of the whole agitated area. In other words, by generating the thermal convection a gentle flow or a convection current is created in the test liquid 210, which facilitates the measurement of the overall stirring unevenness at the photometric position. As explained above, the thermal convection allows the test liquid 210 to attain the degree of randomness (i.e., movement of the molecules of the test liquid 210 throughout the length of the first cuvette 212). As a result, the absorbance values of the complete test liquid 210 contained in the first cuvette 212 are determined within the predetermined time by the determination module 206. Further, the determination module 206 performs the quantitative analysis of the photometric data and outputs the status of the stirring quality of the test liquid 210 as explained above.

Referring back to FIG. 2A, the determination module 206 is further configured to operate the stirrer 202 at an optimum speed. Generally, an inaccurate stirring rate may result in the formation of bubbles on a liquid surface of the test liquid 210, and splashing of the test liquid 210 to the interior wall surface of the first cuvette 212, or the like. Hence, in some scenarios, the inaccurate stirring rate becomes a factor in measurement deterioration. To that effect, the determination module 206 is configured to determine an optimum stirring rate to minimize and/or prevent the aforementioned disadvantages. The determination module 206 determines the optimum stirring rate based at least on the result of the stirring quality determined by the determination module 206. Additionally, the determination module 206 may consider the aspect of the viscosity of the test liquid (e.g., the test liquid 210) for determining the optimum stirring rate. Thereafter, the determination module 206 transmits a control signal to operate the stirrer (e.g., the stirrer 202) for agitating the test liquid 210 based at least on the optimum stirring rate.

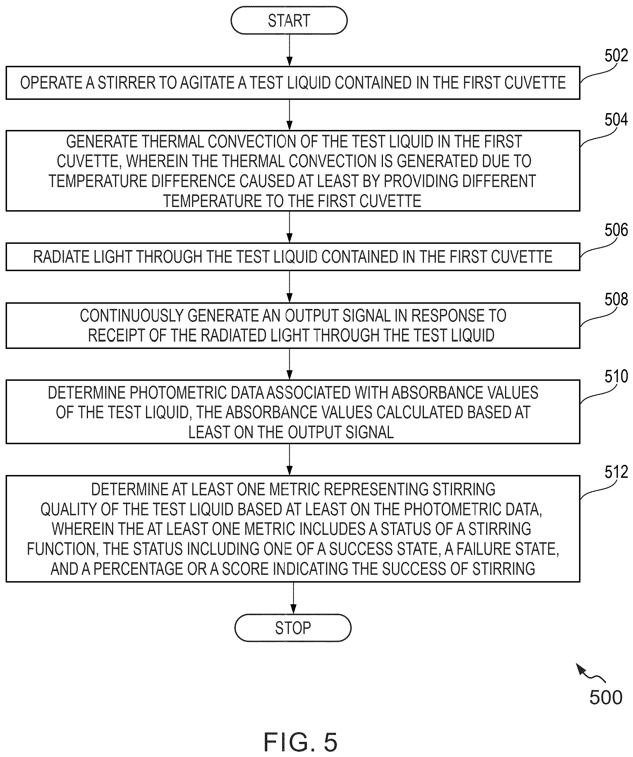

FIG. 5 illustrates a flow diagram of a method 500 for checking the stirring quality of the test liquid in the chemical analyzer, in accordance with an embodiment of the present disclosure. Operations of the flow diagram of the method 500, and combinations of the operations in the flow diagram of the method 500, may be implemented by, for example, hardware, firmware, a processor, circuitry, and/or a different device associated with the execution of software that includes one or more computer program instructions. The sequence of operations of the method 500 may not be necessarily executed in the same order as they are presented. Further, one or more operations may be grouped and performed in the form of a single step, or one operation may have several sub-steps that may be performed in a parallel or sequential manner. The method 500 starts at operation 502.

At operation 502, the method 500 includes operating the stirrer 202 to agitate the test liquid 210 contained in the first cuvette 212. As explained above, the determination module 206 is configured to operate the stirrer 202 at the optimum stirring rate upon dispensing the test liquid 210 into the first cuvette 212.

At operation 504, the method 500 includes generating thermal convection of the test liquid 210 in the first cuvette 212. The thermal convection is generated due to temperature difference caused at least by providing different temperatures to the first cuvette 212. In one example scenario, the temperature difference is caused around the first cuvette 212 based on the liquid 214 of different temperatures present in the second cuvette 216 arranged adjacent to the first cuvette 212 as explained with reference to FIGS. 2B and 2C. The thermal convection facilitates the movement of the test liquid 210 through the first cuvette 212 which helps in determining the absorbance values for the agitated area or the stirring region in the first cuvette 212.

At operation 506, the method 500 includes radiating light through the test liquid 210 contained in the first cuvette 212. Upon initializing the thermal convection of the test liquid 210, light source 302 of the photometric device 204 radiates light onto the lower portion 304 of the first cuvette 212.

At operation 508, the method 500 includes continuously generating an output signal in response to receipt of the radiated light through the test liquid 210. Specifically, the photodetector 306 is configured to continuously generate the output signal in response to receipt of the radiated light through the test liquid 210.

At operation 510, the method 500 includes determining photometric data associated with the absorbance values of the test liquid 210. The absorbance values are calculated based at least on the output signal. The determination module 206 is configured to receive the output signal from the photometric device 204 until the thermal convection is eliminated. Thereafter, the determination module 206 is configured to calculate the absorbance values based at least on the output signal and determine the photometric data associated with the absorbance values of the test liquid 210.

At operation 512, the method 500 includes determining at least one metric representing the stirring quality of the test liquid 210 based at least on the photometric data. At least one metric includes the status of a stirring function. The status includes one of a success state, a failure state, and a percentage or a score indicating the success of stirring. Further, operations 502 to 512 are already explained in detail with reference to FIGS. 1-4, and therefore they are not reiterated again for the sake of brevity.

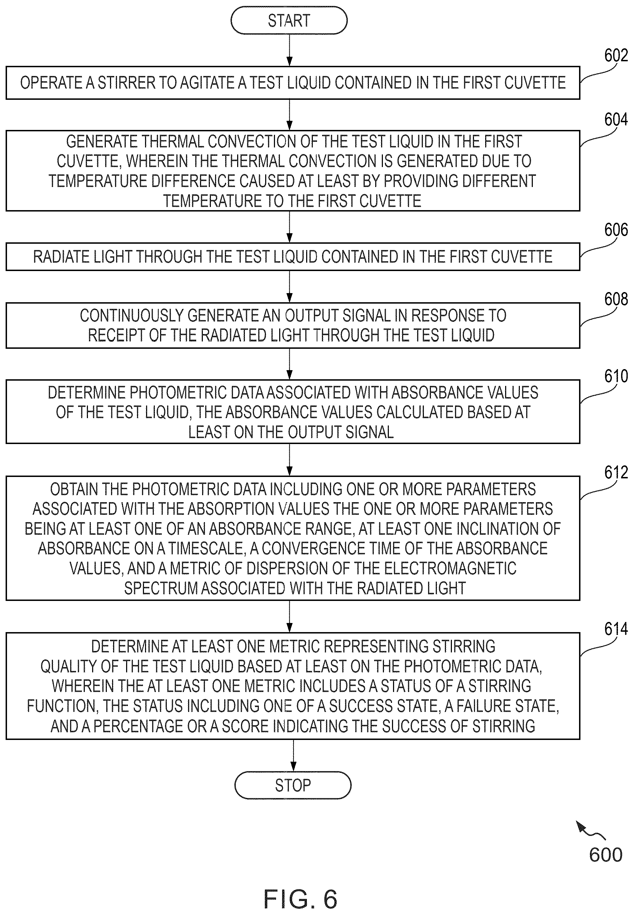

FIG. 6 illustrates a flow diagram of a method 600 for checking the stirring quality of the test liquid in the chemical analyzer, in accordance with another embodiment of the present disclosure. The sequence of operations of the method 600 may not be necessarily executed in the same order as they are presented. Further, one or more operations may be grouped and performed in the form of a single step, or one operation may have several sub-steps that may be performed in a parallel or sequential manner. The method 600 starts at operation 602.

At operation 602, the method 600 includes operating the stirrer 202 to agitate the test liquid 210 contained in the first cuvette 212.

At operation 604, the method 600 includes generating thermal convection of the test liquid 210 in the first cuvette 212. The thermal convection is generated due to temperature difference caused at least by providing different temperatures to the first cuvette 212.

At operation 606, the method 600 includes radiating light through the test liquid 210 contained in the first cuvette 212.

At operation 608, the method 600 includes continuously generating an output signal in response to receipt of the radiated light through the test liquid 210.

At operation 610, the method 600 includes determining photometric data associated with absorbance values of the test liquid 210. The absorbance values are calculated based at least on the output signal.

At operation 612, the method 600 includes obtaining the photometric data including one or more parameters associated with the absorption values. The one or more parameters being at least one of an absorbance range, at least one inclination of absorbance on a timescale, a convergence time of the absorbance values, and a metric of dispersion of the electromagnetic spectrum associated with the radiated light.

At operation 614, the method 600 includes determining at least one metric representing the stirring quality of the test liquid 210 based at least on the photometric data. At least one metric includes the status of a stirring function. The status includes one of a success state, a failure state, and a percentage or a score indicating the success of stirring. Further, operations 602 to 614 are already explained in detail with reference to FIGS. 1-5, and therefore they are not reiterated again for the sake of brevity.

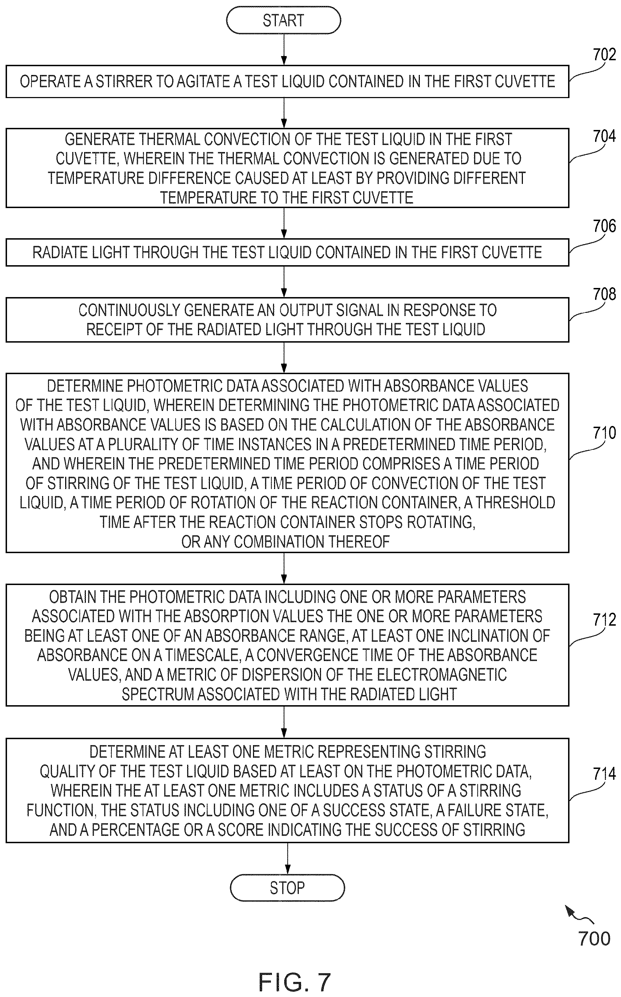

FIG. 7 illustrates a flow diagram of a method 700 for checking the stirring quality of the test liquid in the chemical analyzer, in accordance with another embodiment of the present disclosure. The sequence of operations of the method 700 may not be necessarily executed in the same order as they are presented. Further, one or more operations may be grouped and performed in the form of a single step, or one operation may have several sub-steps that may be performed in a parallel or sequential manner. The method 700 starts at operation 702.

At operation 702, the method 700 includes operating the stirrer 202 to agitate the test liquid 210 contained in the first cuvette 212.

At operation 704, the method 700 includes generating thermal convection of the test liquid 210 in the first cuvette 212. The thermal convection is generated due to temperature difference caused at least by providing different temperatures to the first cuvette 212.

At operation 706, the method 700 includes radiating light through the test liquid 210 contained in the first cuvette 212.

At operation 708, the method 700 includes continuously generating an output signal in response to receipt of the radiated light through the test liquid 210.

At operation 710, the method 700 includes determining photometric data associated with absorbance values of the test liquid 210. Further, determining the photometric data associated with the absorbance values is based on the calculation of the absorbance values at a plurality of time instances in a predetermined time period. The predetermined time period includes a time period of stirring of the test liquid 210, a time period of convection of the test liquid 210, a time period of rotation of the reaction container 106, a threshold time after the reaction container 106 stops rotating, or any combination thereof.

At operation 712, the method 700 includes obtaining the photometric data including one or more parameters associated with the absorption values. The one or more parameters being at least one of an absorbance range, at least one inclination of absorbance on a timescale, a convergence time of the absorbance values, and a metric of dispersion of the electromagnetic spectrum associated with the radiated light.

At operation 714, the method 700 includes determining at least one metric representing the stirring quality of the test liquid 210 based at least on the photometric data. At least one metric includes the status of a stirring function. The status includes one of a success state, a failure state, and a percentage or a score indicating the success of stirring. Further, operations 802 to 814 are already explained in detail with reference to FIGS. 1-6, and therefore they are not reiterated again for the sake of brevity.

The disclosed methods with reference to FIG. 5 to FIG. 7, or one or more operations of the apparatuses 118 or 200 may be implemented using software including computer-executable instructions or machine-readable instructions stored on one or more computer-readable media (*e.g.,* non-transitory computer-readable media, such as one or more optical media discs, volatile memory components (*e.g.,* DRAM or SRAM), or non-volatile memory or storage components (*e.g.,* hard drives or solid-state non-volatile memory components, such as Flash memory components)) and executed on a computer, a laptop computer, netbook, Webbook, tablet computing device, smartphone, or other mobile computing devices). Such software may be executed, for example, on a single local computer or in a network environment (*e.g.,* via the Internet, a wide-area network, a local-area network, a remote web-based server, a client-server network (such as a cloud computing network), or other such networks) using one or more network computers. Additionally, any of the intermediate or final data created and used during the implementation of the disclosed methods or systems may also be stored on one or more computer-readable media (*e.g.,* non-transitory computer-readable media) and are considered to be within the scope of the disclosed technology. Furthermore, any of the software-based embodiments may be uploaded, downloaded, or remotely accessed through a suitable communication means. Such a suitable communication means includes, for example, the Internet, the World Wide Web, an intranet, software applications, cable (including fiber optic cable), magnetic communications, electromagnetic communications (including RF, microwave, and infrared communications), electronic communications, or other such communication means.

Although the present disclosure has been described with reference to specific exemplary embodiments, it is noted that various modifications and changes may be made to these embodiments. For example, the various operations, blocks, etc., described herein may be enabled and operated using hardware circuitry (for example, complementary metal-oxide-semiconductor (CMOS) based logic circuitry), firmware, software, and/or any combination of hardware, firmware, and/or software (for example, embodied in a machine-readable medium). For example, the apparatuses and methods may be embodied using transistors, logic gates, and electrical circuits (for example, application-specific integrated circuit (ASIC) circuitry and/or Digital Signal Processor (DSP) circuitry).

Particularly, the determination module 206 among other components of the apparatus 200 may be enabled using software and/or using transistors, logic gates, and electrical circuits (for example, integrated circuit circuitry such as ASIC circuitry). Various embodiments of the present disclosure may include one or more computer programs stored or otherwise embodied on a computer-readable medium, wherein the computer programs are configured to cause a processor or the computer to perform one or more operations. A computer-readable medium storing, embodying, or encoded with a computer program, or similar language, may be embodied as a tangible data storage device storing one or more software programs that are configured to cause a processor or computer to perform one or more operations. Such operations may be, for example, any of the steps or operations described herein. In some embodiments, the computer programs may be stored and provided to a computer using any type of non-transitory computer-readable media. Non-transitory computer-readable media include any type of tangible storage media. Examples of non-transitory computer-readable media include magnetic storage media (such as floppy disks, magnetic tapes, hard disk drives, etc.), optical magnetic storage media (*e.g.,* magneto-optical disks), CD-ROM (compact disc read-only memory), CD-R (compact disc recordable), CD-R/W (compact disc rewritable), DVD (Digital Versatile Disc), BD (BLU-RAY® Disc), and semiconductor memories (such as mask ROM, PROM (programmable ROM), EPROM (erasable PROM), flash memory, RAM (random access memory), etc.). Additionally, a tangible data storage device may be embodied as one or more volatile memory devices, one or more non-volatile memory devices, and/or a combination of one or more volatile memory devices and non-volatile memory devices. In some embodiments, the computer programs may be provided to a computer using any type of transitory computer-readable media. Examples of transitory computer-readable media include electric signals, optical signals, and electromagnetic waves. Transitory computer-readable media can provide the program to a computer via a wired communication line (*e.g.,* electric wires, and optical fibers) or a wireless communication line.

Various embodiments of the disclosure, as discussed above, may be practiced with steps and/or operations in a different order, and/or with hardware elements in configurations, which are different than those which are disclosed. Therefore, although the disclosure has been described based upon these exemplary embodiments, it is noted that certain modifications, variations, and alternative constructions may be apparent and well within the scope of the disclosure. The scope of the invention is defined in the appended claims.

## Claims

1. An apparatus (200) for checking stirring quality of a chemical analyzer (100), the chemical analyzer (100) comprising a reaction container (106) holding a first cuvette (212), the apparatus (100) comprising:

   a stirrer (202) configured to generate agitation of a test liquid (210) contained in the first cuvette (212);
   a convection generator (208) configured to generate thermal convection of the test liquid (210) in the first cuvette (212), wherein the thermal convection is generated due to temperature difference caused at least by providing different temperature to the first cuvette (212);
   a photometric device (204) configured, at least in part, to:

      radiate light through the test liquid (210) contained in the first cuvette (212) during the thermal convection of the test liquid (210), and
      continuously generate an output signal in response to receipt of the radiated light through the test liquid (210); and

   a determination module (206) configured, at least in part, to:

      determine photometric data associated with absorbance values of the test liquid (210), the absorbance values calculated based at least on the output signal, and
      determine at least one metric representing stirring quality of the test liquid (210) based at least on the photometric data.

2. The apparatus (200) as claimed in claim 1, wherein the at least one metric comprises a status of a stirring function, the status comprising one of a success state; a failure state; and a percentage or a score indicating the success of stirring.

3. The apparatus (200) as claimed in claims 1 or 2, wherein the determination module (206) is further configured, at least in part, to:

   calculate the absorption values based on the output signal; and
   obtain the photometric data comprising one or more parameters associated with the absorption values, the one or more parameters being at least one of an absorbance range; at least one inclination of absorbance on a time scale; a convergence time of the absorbance values; and a metric of dispersion associated with the absorption values.

4. The apparatus (200) as claimed in any of the claims 1 to 3, wherein the determination module (206) is further configured, at least in part, to:

   determine an optimum stirring rate based at least on the result of the stirring quality determined by the determination module (206); and
   transmit a control signal to operate the stirrer (202) for agitating the test liquid (210) based at least on the optimum stirring rate.

5. The apparatus (200) as claimed in claim 1, wherein the photometric device (204) comprises:

a light source (302) configured to radiate the light onto at least a lower portion (304) of the first cuvette (212); and
a photodetector (306) configured to generate the output signal based at least on electromagnetic spectrum associated with the radiated light.

6. The apparatus (200) as claimed in any of the claims 1 or 5, wherein the stirrer (202) comprises one or more of: a mechanically driven stirring rod, a magnetic stirrer, an ultrasonic stirrer, an electromagnetic wave-based stirrer, and an electrolytic stirrer.

7. The apparatus (200) as claimed in claim 1, wherein the reaction container (106) holds at least one second cuvette (216) positioned adjacent to the first cuvette (212), and wherein the second cuvette (216) is configured to hold liquid (214) of a different temperature, thereby resulting in the temperature difference around the first cuvette (212).

8. The apparatus (200) as claimed in claim 1, wherein the reaction container (106) holds at least one second cuvette (216) positioned on two opposite adjacent sides of the first cuvette (212), and wherein second cuvettes (216) arranged on two opposite adjacent sides of the first cuvette (212) are configured to hold liquids (214) of different temperatures, thereby resulting in the temperature difference around the first cuvette (212).

9. The apparatus (200) as claimed in claims 7 or 8, wherein the convection generator (208) is configured to generate the temperature difference to liquid (214) contained in the at least one second cuvette (216) for causing thermal convection of the test liquid (210) in the first cuvette (212), and
wherein the convection generator (208) is configured to adjust a temperature of a liquid (214a) in one second cuvette of the two adjacent second cuvette (216) more than a first threshold temperature and adjust a temperature of liquid (214b) in another second cuvette of the two adjacent second cuvette (216) less than a second threshold temperature.

10. The apparatus (200) as claimed in any of the claims 1 to 9, wherein the test liquid (210) includes a combination of a specimen and a reagent or a combination of water and dye.

11. The apparatus (200) as claimed in any of the claims 1 to 10, wherein the determination module (206) is further configured, at least in part, to determine the photometric data associated with absorbance values calculated at a plurality of time instances in a predetermined time period.

12. The apparatus (200) as claimed in claim 11, wherein the predetermined time period comprises: a time period of stirring of the test liquid (210), a time period of convection of the test liquid (210), a time period of rotation of the reaction container (106), a threshold time after the reaction container (106) stops rotating, or any combination thereof.

13. The apparatus (200) as claimed in any of the claims 1 to 12, wherein the radiated light comprises at least one of: light transmitted through the first cuvette (212); and scattered light through the first cuvette (212).

14. A method (500; 600; 700) for checking stirring quality of a chemical analyzer (100), the chemical analyzer (100) comprising a reaction container (106) holding a first cuvette (212), the method (500) comprising:

operating (502; 602; 702) a stirrer (202) to agitate a test liquid (210) contained in the first cuvette (212);
generating (504; 604; 704) thermal convection of the test liquid (210) in the first cuvette (212), wherein the thermal convection is generated due to temperature difference caused at least by providing different temperature to the first cuvette (212);
radiating (506; 606; 706) light through the test liquid (210) contained in the first cuvette (212) during the thermal convection of the test liquid (210);
continuously generating (508; 608; 708) an output signal in response to receipt of the radiated light through the test liquid (210);
determining (510; 610; 710) photometric data associated with absorbance values of the test liquid (210), the absorbance values calculated based at least on the output signal; and
determining (512; 614; 714) at least one metric representing stirring quality of the test liquid (210) based at least on the photometric data, wherein the at least one metric comprises a status of a stirring function, the status comprising one of a success state; a failure state; and a percentage or a score indicating the success of stirring.

15. The method (500; 600; 700) as claimed in claim 14, wherein determining the photometric data comprises:

calculating the absorption values based on the output signal; and
obtaining the photometric data comprising one or more parameters associated with the absorption values, the one or more parameters being at least one of an absorbance range, at least one inclination of absorbance on a time scale, a convergence time of the absorbance values, and a metric of dispersion of the electromagnetic spectrum associated with the absorption values.

**Patentansprüche**

1. Vorrichtung (200) zum Überprüfen der Rührqualität eines chemischen Analysators (100), wobei der chemische Analysator (100) einen Reaktionsbehälter (106) aufweist, der eine erste Küvette (212) enthält, wobei die Vorrichtung (100) aufweist:

    einen Rührer (202), der konfiguriert ist, um eine Bewegung einer Testflüssigkeit (210) zu erzeugen, die in der ersten Küvette (212) enthalten ist;
    einen Konvektionsgenerator (208), der konfiguriert ist, um eine thermische Konvektion der Testflüssigkeit (210) in der ersten Küvette (212) zu erzeugen, wobei die thermische Konvektion aufgrund einer Temperaturdifferenz erzeugt wird, die zumindest dadurch verursacht wird, dass der ersten Küvette (212) eine andere Temperatur bereitgestellt wird;
    eine photometrische Vorrichtung (204), die zumindest teilweise konfiguriert ist, um:

        Licht durch die Testflüssigkeit (210), die in der ersten Küvette (212) enthalten ist, während der thermischen Konvektion der Testflüssigkeit (210) abzustrahlen, und
        kontinuierlich ein Ausgangssignal als Reaktion auf den Empfang des abgestrahlten Lichts durch die Testflüssigkeit (210) zu erzeugen; und

    ein Bestimmungsmodul (206), das zumindest teilweise konfiguriert ist, um:

        photometrische Daten zu bestimmen, die mit Absorptionswerten der Testflüssigkeit (210) assoziiert sind, wobei die Absorptionswerte zumindest basierend auf dem Ausgangssignal berechnet werden, und
        zumindest eine Metrik zu bestimmen, die die Rührqualität der Testflüssigkeit (210) basierend zumindest auf den photometrischen Daten darstellt.

2. Vorrichtung (200) nach Anspruch 1, wobei die zumindest eine Metrik einen Status einer Rührfunktion aufweist, wobei der Status einen von einem Erfolgszustand; einem Ausfallzustand; und einem Prozentsatz oder einer Punktzahl aufweist, die den Erfolg des Rührens anzeigt.

3. Vorrichtung (200) nach Anspruch 1 oder 2, wobei das Bestimmungsmodul (206) ferner zumindest teilweise konfiguriert ist, um:

    die Absorptionswerte basierend auf dem Ausgangssignal zu berechnen; und
    die photometrischen Daten zu erhalten, die einen oder mehrere Parameter aufweisen, die mit den Absorptionswerten assoziiert sind,
    wobei der eine oder die mehreren Parameter zumindest einer von einem Absorptionsbereich; zumindest einer Neigung der Absorption auf einer Zeitskala; einer Konvergenzzeit der Absorptionswerte; und einer Metrik der Dispersion sind, die mit den Absorptionswerten assoziiert ist.

4. Vorrichtung (200) nach einem der Ansprüche 1 bis 3, wobei das Bestimmungsmodul (206) ferner zumindest teilweise konfiguriert ist, um:

    eine optimale Rührrate basierend zumindest auf dem Ergebnis der Rührqualität zu bestimmen, die durch das Bestimmungsmodul (206) bestimmt wird; und
    ein Steuersignal zu übertragen, um den Rührer (202) zum Bewegen der Testflüssigkeit (210) basierend zumindest auf der optimalen Rührrate zu betreiben.

5. Vorrichtung (200) nach Anspruch 1, wobei die photometrische Vorrichtung (204) aufweist:

    eine Lichtquelle (302), die konfiguriert ist, um das Licht auf zumindest einen unteren Abschnitt (304) der ersten Küvette (212) abzustrahlen; und

einen Photodetektor (306), der konfiguriert ist, um das Ausgangssignal basierend zumindest auf einem elektromagnetischen Spektrum zu erzeugen, das mit dem abgestrahlten Licht assoziiert ist.

6. Vorrichtung (200) nach einem der Ansprüche 1 oder 5, wobei der Rührer (202) eines oder mehrere aufweist von: einer mechanisch angetriebenen Rührstange, einem Magnetrührer, einem Ultraschallrührer, einem Rührer auf der Basis elektromagnetischer Wellen und einem elektrolytischen Rührer.

7. Vorrichtung (200) nach Anspruch 1, wobei der Reaktionsbehälter (106) zumindest eine zweite Küvette (216) enthält, die benachbart zu der ersten Küvette (212) positioniert ist, und wobei die zweite Küvette (216) konfiguriert ist, um eine Flüssigkeit (214) mit einer anderen Temperatur zu halten, was zu der Temperaturdifferenz um die erste Küvette (212) herum führt.

8. Vorrichtung (200) nach Anspruch 1, wobei der Reaktionsbehälter (106) zumindest eine zweite Küvette (216) enthält, die auf zwei gegenüberliegenden benachbarten Seiten der ersten Küvette (212) positioniert ist, und wobei zweite Küvetten (216), die auf zwei gegenüberliegenden benachbarten Seiten der ersten Küvette (212) angeordnet sind, konfiguriert sind, um Flüssigkeiten (214) mit unterschiedlichen Temperaturen zu halten, was zu der Temperaturdifferenz um die erste Küvette (212) herum führt.

9. Vorrichtung (200) nach Anspruch 7 oder 8, wobei der Konvektionsgenerator (208) konfiguriert ist, um die Temperaturdifferenz zu der Flüssigkeit (214) zu erzeugen, die in der zumindest einen zweiten Küvette (216) enthalten ist, um eine thermische Konvektion der Testflüssigkeit (210) in der ersten Küvette (212) zu verursachen, und wobei der Konvektionsgenerator (208) konfiguriert ist, um eine Temperatur einer Flüssigkeit (214a) in einer zweiten Küvette der zwei benachbarten zweiten Küvetten (216) höher als eine erste Schwellentemperatur einzustellen und eine Temperatur einer Flüssigkeit (214b) in einer anderen zweiten Küvette der zwei benachbarten zweiten Küvetten (216) niedriger als eine zweite Schwellentemperatur einzustellen.

10. Vorrichtung (200) nach einem der Ansprüche 1 bis 9, wobei die Testflüssigkeit (210) eine Kombination aus einer Probe und einem Reagenz oder eine Kombination aus Wasser und Farbstoff enthält.

11. Vorrichtung (200) nach einem der Ansprüche 1 bis 10, wobei das Bestimmungsmodul (206) ferner zumindest teilweise konfiguriert ist, um die photometrischen Daten zu bestimmen, die mit Absorptionswerten assoziiert sind, die zu einer Vielzahl von Zeitpunkten in einem vorbestimmten Zeitraum berechnet werden.

12. Vorrichtung (200) nach Anspruch 11, wobei der vorbestimmte Zeitraum aufweist: einen Zeitraum des Rührens der Testflüssigkeit (210), einen Zeitraum der Konvektion der Testflüssigkeit (210), einen Zeitraum der Drehung des Reaktionsbehälters (106), eine Schwellenzeit, nachdem der Reaktionsbehälter (106) aufhört zu drehen, oder eine beliebige Kombination davon.

13. Vorrichtung (200) nach einem der Ansprüche 1 bis 12, wobei das abgestrahlte Licht zumindest eines aufweist von: Licht, das durch die erste Küvette (212) übertragen wird; und Streulicht durch die erste Küvette (212).

14. Verfahren (500; 600; 700) zum Überprüfen der Rührqualität eines chemischen Analysators (100), wobei der chemische Analysator (100) einen Reaktionsbehälter (106) aufweist, der eine erste Küvette (212) enthält, wobei das Verfahren (500) aufweist:

Betreiben (502; 602; 702) eines Rührers (202), um eine Testflüssigkeit (210) zu bewegen, die in der ersten Küvette (212) enthalten ist;
Erzeugen (504; 604; 704) einer thermischen Konvektion der Testflüssigkeit (210) in der ersten Küvette (212), wobei die thermische Konvektion aufgrund einer Temperaturdifferenz erzeugt wird, die zumindest dadurch verursacht wird, dass der ersten Küvette (212) eine andere Temperatur bereitgestellt wird;
Abstrahlen (506; 606; 706) von Licht durch die Testflüssigkeit (210), die in der ersten Küvette (212) enthalten ist, während der thermischen Konvektion der Testflüssigkeit (210);
kontinuierliches Erzeugen (508; 608; 708) eines Ausgangssignals als Reaktion auf den Empfang des abgestrahlten Lichts durch die Testflüssigkeit (210);
Bestimmen (510; 610; 710) von photometrischen Daten, die mit Absorptionswerten der Testflüssigkeit (210) assoziiert sind, wobei die Absorptionswerte zumindest basierend auf dem Ausgangssignal berechnet werden; und

Bestimmen (512; 614; 714) zumindest einer Metrik, die die Rührqualität der Testflüssigkeit (210) basierend zumindest auf den photometrischen Daten darstellt, wobei die zumindest eine Metrik einen Status einer Rührfunktion aufweist, wobei der Status einen von einem Erfolgszustand; einem Ausfallzustand; und einem Prozentsatz oder einer Punktzahl aufweist, die den Erfolg des Rührens anzeigt.

15. Verfahren (500; 600; 700) nach Anspruch 14, wobei das Bestimmen der photometrischen Daten aufweist:

Berechnen der Absorptionswerte basierend auf dem Ausgangssignal; und
Erhalten der photometrischen Daten, die einen oder mehrere Parameter aufweisen, die mit den Absorptionswerten assoziiert sind,
wobei der eine oder die mehreren Parameter zumindest einer von einem Absorptionsbereich, zumindest einer Neigung der Absorption auf einer Zeitskala, einer Konvergenzzeit der Absorptionswerte, und einer Metrik der Dispersion des elektromagnetischen Spektrums sind, die mit den Absorptionswerten assoziiert ist.

**Revendications**

1. Appareil (200) pour contrôler la qualité d'agitation d'un analyseur chimique (100), l'analyseur chimique (100) comprenant un récipient de réaction (106) renfermant une première cuvette (212), l'appareil (100) comprenant :

un agitateur (202) configuré pour générer une agitation d'un liquide d'essai (210) contenu dans la première cuvette (212) ;
un générateur de convection (208) configuré pour générer une convection thermique du liquide d'essai (210) dans la première cuvette (212), dans lequel la convection thermique est générée en raison d'une différence de température causée au moins en donnant une température différente à la première cuvette (212);
un dispositif photométrique (204) configuré, au moins en partie, pour :

émettre une lumière à travers le liquide d'essai (210) contenu dans la première cuvette (212) pendant la convection thermique du liquide d'essai (210), et
générer en continu un signal de sortie en réponse à la réception de la lumière émise à travers le liquide d'essai (210) ; et
un module de détermination (206) configuré, au moins en partie, pour :

déterminer des données photométriques associées à des valeurs d'absorbance du liquide d'essai (210), les valeurs d'absorbance étant calculées au moins sur la base du signal de sortie, et
déterminer au moins une métrique représentant la qualité d'agitation du liquide d'essai (210) au moins sur la base des données photométriques.

2. Appareil (200) selon la revendication 1, dans lequel l'au moins une métrique comprend un état d'une fonction d'agitation, l'état comprenant un parmi un état de succès; un état d'échec ; et un pourcentage ou un score indiquant le succès de l'agitation.

3. Appareil (200) selon les revendications 1 ou 2, dans lequel le module de détermination (206) est en outre configuré, au moins en partie, pour :

calculer les valeurs d'absorption sur la base du signal de sortie ; et
obtenir les données photométriques comprenant un ou plusieurs paramètres associés aux valeurs d'absorption, les un ou plusieurs paramètres étant au moins un parmi une plage d'absorbance ; au moins une inclinaison d'absorbance sur une échelle de temps ; un temps de convergence des valeurs d'absorbance ; et une métrique de dispersion associée aux valeurs d'absorption.

4. Appareil (200) selon l'une des revendications 1 à 3, dans lequel le module de détermination (206) est en outre configuré, au moins en partie, pour :

déterminer une vitesse d'agitation optimale au moins sur la base du résultat de la qualité d'agitation déterminée par le module de détermination (206) ; et
transmettre un signal de commande pour faire fonctionner l'agitateur (202) pour agiter le liquide d'essai (210) au moins sur la base de la vitesse d'agitation optimale.

**5.** Appareil (200) selon la revendication 1, dans lequel le dispositif photométrique (204) comprend :

une source de lumière (302) configurée pour émettre la lumière sur au moins une partie inférieure (304) de la première cuvette (212) ; et
un photodétecteur (306) configuré pour générer le signal de sortie au moins sur la base d'un spectre électromagnétique associé à la lumière émise.

**6.** Appareil (200) selon l'une des revendications 1 ou 5, dans lequel l'agitateur (202) comprend un ou plusieurs parmi : une tige d'agitation entraînée mécaniquement, un agitateur magnétique, un agitateur ultrasonique, un agitateur basé sur des ondes électromagnétiques et un agitateur électrolytique.

**7.** Appareil (200) selon la revendication 1, dans lequel le récipient de réaction (106) renferme au moins une seconde cuvette (216) positionnée adjacente à la première cuvette (212), et dans lequel la seconde cuvette (216) est configurée pour renfermer un liquide (214) d'une température différente, ce qui a pour résultat la différence de température autour de la première cuvette (212).

**8.** Appareil (200) selon la revendication 1, dans lequel le récipient de réaction (106) renferme au moins une seconde cuvette (216) positionnée sur deux côtés adjacents opposés de la première cuvette (212), et dans lequel des secondes cuvettes (216) agencées sur deux côtés adjacents opposés de la première cuvette (212) sont configurées pour renfermer des liquides (214) de températures différentes, ce qui a pour résultat la différence de température autour de la première cuvette (212).

**9.** Appareil (200) selon les revendications 7 ou 8, dans lequel le générateur de convection (208) est configuré pour générer la différence de température avec le liquide (214) contenu dans l'au moins une seconde cuvette (216) pour causer la convection thermique du liquide d'essai (210) dans la première cuvette (212), et dans lequel le générateur de convection (208) est configuré pour ajuster une température d'un liquide (214a) dans une seconde cuvette des deux secondes cuvettes (216) adjacentes au-dessus d'une première température seuil et ajuster une température d'un liquide (214b) dans une autre seconde cuvette des deux secondes cuvettes (216) adjacentes au-dessous d'une seconde température seuil.

**10.** Appareil (200) selon l'une des revendications 1 à 9, dans lequel le liquide d'essai (210) comprend une combinaison d'un échantillon et d'un réactif ou une combinaison d'eau et de colorant.

**11.** Appareil (200) selon l'une des revendications 1 à 10, dans lequel le module de détermination (206) est en outre configuré, au moins en partie, pour déterminer les données photométriques associées à des valeurs d'absorbance calculées à une pluralité d'instances temporelles dans une période de temps prédéterminée.

**12.** Appareil (200) selon la revendication 11, dans lequel la période de temps prédéterminée comprend : une période de temps d'agitation du liquide d'essai (210), une période de temps de convection du liquide d'essai (210), une période de temps de rotation du récipient de réaction (106), un temps seuil après que le récipient de réaction (106) a cessé de tourner, ou toute combinaison de ceux-ci.

**13.** Appareil (200) selon l'une des revendications 1 à 12, dans lequel la lumière émise comprend au moins une parmi : la lumière transmise à travers la première cuvette (212) ; et la lumière dispersée à travers la première cuvette (212).

**14.** Procédé (500 ; 600 ; 700) pour contrôler la qualité d'agitation d'un analyseur chimique (100), l'analyseur chimique (100) comprenant un récipient de réaction (106) renfermant une première cuvette (212), le procédé (500) comprenant :

le fonctionnement (502 ; 602 ; 702) d'un agitateur (202) pour agiter un liquide d'essai (210) contenu dans la première cuvette (212) ;
la génération (504 ; 604 ; 704) de la convection thermique du liquide d'essai (210) dans la première cuvette (212), dans lequel la convection thermique est générée en raison d'une différence de température causée au moins en donnant une température différente à la première cuvette (212) ;
l'émission (506 ; 606 ; 706) de lumière à travers le liquide d'essai (210) contenu dans la première cuvette (212) pendant la convection thermique du liquide d'essai (210) ;
la génération continue (508 ; 608 ; 708) d'un signal de sortie en réponse à la réception de la lumière émise à travers le liquide d'essai (210) ;

la détermination (510 ; 610 ; 710) de données photométriques associées à des valeurs d'absorbance du liquide d'essai (210), les valeurs d'absorbance étant calculées au moins sur la base du signal de sortie ; et

la détermination (512 ; 614 ; 714) d'au moins une métrique représentant la qualité d'agitation du liquide d'essai (210) au moins sur la base des données photométriques, dans lequel l'au moins une métrique comprend un état d'une fonction d'agitation, l'état comprenant un parmi un état de réussite ; un état d'échec ; et un pourcentage ou un score indiquant la réussite de l'agitation.

15. Procédé (500 ; 600 ; 700) selon la revendication 14, dans lequel la détermination des données photométriques comprend :

le calcul des valeurs d'absorption sur la base du signal de sortie ; et

l'obtention des données photométriques comprenant un ou plusieurs paramètres associés aux valeurs d'absorption,

les un ou plusieurs paramètres étant au moins un parmi une plage d'absorbance, au moins une inclinaison d'absorbance sur une échelle de temps, un temps de convergence des valeurs d'absorbance, et une métrique de dispersion du spectre électromagnétique associé aux valeurs d'absorption.

FIG. 1

FIG. 2A

FIG. 2B

FIG. 2C

FIG. 3

FIG. 4

START

OPERATE A STIRRER TO AGITATE A TEST LIQUID CONTAINED IN THE FIRST CUVETTE — 502

GENERATE THERMAL CONVECTION OF THE TEST LIQUID IN THE FIRST CUVETTE, WHEREIN THE THERMAL CONVECTION IS GENERATED DUE TO TEMPERATURE DIFFERENCE CAUSED AT LEAST BY PROVIDING DIFFERENT TEMPERATURE TO THE FIRST CUVETTE — 504

RADIATE LIGHT THROUGH THE TEST LIQUID CONTAINED IN THE FIRST CUVETTE — 506

CONTINUOUSLY GENERATE AN OUTPUT SIGNAL IN RESPONSE TO RECEIPT OF THE RADIATED LIGHT THROUGH THE TEST LIQUID — 508

DETERMINE PHOTOMETRIC DATA ASSOCIATED WITH ABSORBANCE VALUES OF THE TEST LIQUID, THE ABSORBANCE VALUES CALCULATED BASED AT LEAST ON THE OUTPUT SIGNAL — 510

DETERMINE AT LEAST ONE METRIC REPRESENTING STIRRING QUALITY OF THE TEST LIQUID BASED AT LEAST ON THE PHOTOMETRIC DATA, WHEREIN THE AT LEAST ONE METRIC INCLUDES A STATUS OF A STIRRING FUNCTION, THE STATUS INCLUDING ONE OF A SUCCESS STATE, A FAILURE STATE, AND A PERCENTAGE OR A SCORE INDICATING THE SUCCESS OF STIRRING — 512

STOP

500

FIG. 5

START

OPERATE A STIRRER TO AGITATE A TEST LIQUID CONTAINED IN THE FIRST CUVETTE
602

GENERATE THERMAL CONVECTION OF THE TEST LIQUID IN THE FIRST CUVETTE, WHEREIN THE THERMAL CONVECTION IS GENERATED DUE TO TEMPERATURE DIFFERENCE CAUSED AT LEAST BY PROVIDING DIFFERENT TEMPERATURE TO THE FIRST CUVETTE
604

RADIATE LIGHT THROUGH THE TEST LIQUID CONTAINED IN THE FIRST CUVETTE
606

CONTINUOUSLY GENERATE AN OUTPUT SIGNAL IN RESPONSE TO RECEIPT OF THE RADIATED LIGHT THROUGH THE TEST LIQUID
608

DETERMINE PHOTOMETRIC DATA ASSOCIATED WITH ABSORBANCE VALUES OF THE TEST LIQUID, THE ABSORBANCE VALUES CALCULATED BASED AT LEAST ON THE OUTPUT SIGNAL
610

OBTAIN THE PHOTOMETRIC DATA INCLUDING ONE OR MORE PARAMETERS ASSOCIATED WITH THE ABSORPTION VALUES THE ONE OR MORE PARAMETERS BEING AT LEAST ONE OF AN ABSORBANCE RANGE, AT LEAST ONE INCLINATION OF ABSORBANCE ON A TIMESCALE, A CONVERGENCE TIME OF THE ABSORBANCE VALUES, AND A METRIC OF DISPERSION OF THE ELECTROMAGNETIC SPECTRUM ASSOCIATED WITH THE RADIATED LIGHT
612

DETERMINE AT LEAST ONE METRIC REPRESENTING STIRRING QUALITY OF THE TEST LIQUID BASED AT LEAST ON THE PHOTOMETRIC DATA, WHEREIN THE AT LEAST ONE METRIC INCLUDES A STATUS OF A STIRRING FUNCTION, THE STATUS INCLUDING ONE OF A SUCCESS STATE, A FAILURE STATE, AND A PERCENTAGE OR A SCORE INDICATING THE SUCCESS OF STIRRING
614

STOP

600

FIG. 6

START

OPERATE A STIRRER TO AGITATE A TEST LIQUID CONTAINED IN THE FIRST CUVETTE — 702

GENERATE THERMAL CONVECTION OF THE TEST LIQUID IN THE FIRST CUVETTE, WHEREIN THE THERMAL CONVECTION IS GENERATED DUE TO TEMPERATURE DIFFERENCE CAUSED AT LEAST BY PROVIDING DIFFERENT TEMPERATURE TO THE FIRST CUVETTE — 704

RADIATE LIGHT THROUGH THE TEST LIQUID CONTAINED IN THE FIRST CUVETTE — 706

CONTINUOUSLY GENERATE AN OUTPUT SIGNAL IN RESPONSE TO RECEIPT OF THE RADIATED LIGHT THROUGH THE TEST LIQUID — 708

DETERMINE PHOTOMETRIC DATA ASSOCIATED WITH ABSORBANCE VALUES OF THE TEST LIQUID, WHEREIN DETERMINING THE PHOTOMETRIC DATA ASSOCIATED WITH ABSORBANCE VALUES IS BASED ON THE CALCULATION OF THE ABSORBANCE VALUES AT A PLURALITY OF TIME INSTANCES IN A PREDETERMINED TIME PERIOD, AND WHEREIN THE PREDETERMINED TIME PERIOD COMPRISES A TIME PERIOD OF STIRRING OF THE TEST LIQUID, A TIME PERIOD OF CONVECTION OF THE TEST LIQUID, A TIME PERIOD OF ROTATION OF THE REACTION CONTAINER, A THRESHOLD TIME AFTER THE REACTION CONTAINER STOPS ROTATING, OR ANY COMBINATION THEREOF — 710

OBTAIN THE PHOTOMETRIC DATA INCLUDING ONE OR MORE PARAMETERS ASSOCIATED WITH THE ABSORPTION VALUES THE ONE OR MORE PARAMETERS BEING AT LEAST ONE OF AN ABSORBANCE RANGE, AT LEAST ONE INCLINATION OF ABSORBANCE ON A TIMESCALE, A CONVERGENCE TIME OF THE ABSORBANCE VALUES, AND A METRIC OF DISPERSION OF THE ELECTROMAGNETIC SPECTRUM ASSOCIATED WITH THE RADIATED LIGHT — 712

DETERMINE AT LEAST ONE METRIC REPRESENTING STIRRING QUALITY OF THE TEST LIQUID BASED AT LEAST ON THE PHOTOMETRIC DATA, WHEREIN THE AT LEAST ONE METRIC INCLUDES A STATUS OF A STIRRING FUNCTION, THE STATUS INCLUDING ONE OF A SUCCESS STATE, A FAILURE STATE, AND A PERCENTAGE OR A SCORE INDICATING THE SUCCESS OF STIRRING — 714

STOP

700

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6211382 B
- EP 2378292 A1
- EP 2096442 A1
- US 2021041472 A1
- EP 3216518 A1
- EP 0810030 A1
- US 2015165440 A1